# EUROPEAN PATENT APPLICATION

(11) **EP 2 375 796 A1**
(43) Date of publication of application: **12.10.2011**
(21) Application number: 09834027.6
(22) Date of filing: 17.08.2009
(51) Int. Cl.: H04W 8/08

(54) **METHOD, SYSTEM AND MOBILE ACCESS GATEWAY FOR LOCAL ROUTING OPTIMIZATION**

(30) Priority: 26.12.2008 CN 200810241691
(71) Applicant: Huawei Technologies Co., Ltd., Shenzhen, Guangdong 518129 (CN)
(72) Inventor: WU, Qin, Shenzhen Guangdong 518129 (CN); WANG, Yungui, Shenzhen Guangdong 518129 (CN); XIA, Jinwei, Shenzhen Guangdong 518129 (CN); GONG, Xiaoyu, Shenzhen Guangdong 518129 (CN)
(74) Representative: Pfenning, Meinig & Partner GbR
(86) International application number: PCT/CN2009/073297
(87) International publication number: WO 2010/072074

(57) **Abstract**

A method, system, and Mobile Access Gateway, MAG, for local routing optimization are provided. After receiving a packet sent from a Mobile Node, MN, to a Correspondent Node, CN, an MAG queries for a binding update entry corresponding to the MN. When an MAG local routing flag is set in the binding update entry, the packet is sent to the CN; and when a Local Mobile Anchor (LMA) local routing flag is set in the binding update entry, the packet is sent to an MAG of the CN. With the present invention, the delay in sending the packet from an MN to a CN is shortened, the communication efficiency is increased and the user experience is improved.

## Description

This application claims priority to Chinese Patent Application No. 200810241691.9, filed with the Chinese Patent Office on December 26, 2008 and entitled "METHOD, SYSTEM, AND MOBILE ACCESS GATEWAY FOR LOCAL ROUTING OPTIMIZATION", which is incorporated hereby by reference in its entirety.

### FIELD OF THE INVENTION

The present invention relates to the field of communication technologies, and in particular, to a method, system, and Mobile Access Gateway (MAG) for local routing optimization.

### BACKGROUND OF THE INVENTION

Mobility management mainly refers to the management of a mobile terminal (that is, a Mobile Node (MN)), and has two meanings, that is, handover management and location management. The handover management refers to that an ongoing session is not interrupted when a terminal moves; and the location management refers to that a system tracks and locates a mobile terminal, and establishes call connection with the mobile terminal when a call comes in. The mobility management may be implemented at a host side or a network side. In the mobility management at the host side, an MN is required to serve as a terminal and participate in the mobility management, and in the mobility management at the network side, a mobile agent at the network side participates in the mobility management in place of the MN.

The mobility management at the host side supports packet forwarding in two modes: tunnel mode and routing optimization mode. In the tunnel mode, a home agent located in a home network of an MN captures a packet sent from a Correspondent Node (CN) to a home address of the MN, then queries a binding update list according to the home address, so as to determine a care-of address corresponding to the MN, and sends the packet to the MN through a tunnel between the home agent and the MN; and when a packet is sent from the MN to the CN, the home agent also captures the packet sent from the MN, processes the packet, and then forwards the packet to the CN.

In the routing optimization mode, the packet sent from the MN to the CN is directly sent to the CN without passing through the home agent, and the packet sent from the CN to the MN is also directly sent to the MN without passing through the home agent. To implement the routing optimization, it is required to establish a binding update list respectively in the MN and the CN through a binding process between the MN and the CN.

In a mobility management process performed by a network side, a CN sends a packet to a home address of an MN, where the packet is captured by a Local Mobile Anchor (LMA) of the CN. The LMA then queries a binding update list according to a Home Network Prefix (HNP) contained in a destination address of the packet, so as to determine an address of an MAG to which the MN is currently attached, and sends the packet to the MAG for processing through a tunnel between the LMA and the MAG, and the MAG decapsulates the packet, and sends the packet to the MN according to the destination address (that is, the home address of the MN) of an interior packet.

When sending a packet from the MN to the CN, the MAG receives and encapsulates the packet, adds an exterior Internet Protocol (IP) packet header (a source address is an address of the MAG, and a destination address is an address of the LMA), and then sends the packet to the LMA through the tunnel between the MAG and the LMA. The LMA removes the exterior IP packet header, and forwards the interior packet to the CN.

During the research, the inventors find that although the above solution provides a clew for performing routing optimization between an MN and a CN, no specific solution, especially no method for configuring a local routing optimization policy, is provided.

### SUMMARY OF THE INVENTION

Embodiments of the present invention provide a method, system, and MAG for local routing optimization, so as to solve problems related to the local routing optimization in communication between an MN and a CN.

The method for local routing optimization includes: receiving a packet sent from an MN with a destination address of a CN; querying for a binding update entry corresponding to the MN and the CN, and acquiring a local routing flag in the binding update entry; when the local routing flag in the binding update entry is an MAG local routing flag MAGLocalRouting, sending the packet to the CN; and when the local routing flag in the binding update entry is an LMA local routing flag LMALocalRouting, sending the packet to an MAG of the CN.

The MAG includes: a receiving module, configured to receive a packet sent from an MN with a destination address of a CN; a query module, configured to query for a binding update entry corresponding to the MN and the CN; and a sending module, configured to send the packet to the CN, when a local routing flag in the binding update entry is an MAG local routing flag MAGLocalRouting, and send the packet to an MAG of the CN, when the local routing flag in the binding update entry is an LMA local routing flag LMALocalRouting.

The system for local routing optimization includes a first MAG (MAG1) and an LMA, where the MAG1 is configured to acquire a local routing flag from the LMA, establish a binding update entry of an MN and a CN, and set the local routing flag in the binding update entry; and after receiving the packet, forward, according to the binding update entry, a packet sent from the MN with a destination address of the CN.

According to embodiments of the present invention, the MAG acquires the local routing flag from the LMA, so that the MAG can send the packet sent from the MN to the CN or to the MAG of the CN in a routing optimization mode according to the local routing flag, so as to avoid delay caused by the need of sending the packet to the LMA first in the tunnel mode, thereby improving the communication efficiency.

### BRIEF DESCRIPTION OF THE DRAWINGS

FIG 1 is a view illustrating a scenario in which an MN and a CN are attached to the same MAG according to an embodiment of the present invention;
FIG 2 is a flow chart of a method for implementing local routing optimization when an MN and a CN are attached to the same MAG according to an embodiment of the present invention;
FIG 3 is a view illustrating a scenario in which an MN and a CN are attached to different MAGs in the same LMA management domain according to another embodiment of the present invention;
FIG. 4 is a flow chart of a method for implementing local routing optimization when an MN and a CN are attached to different MAGs in the same LMA management domain according to another embodiment of the present invention;
FIG 5 is a flow chart of a method in which local routing optimization is actively initiated by an LMA when an MN and a CN are located in the same LMA management domain according to another embodiment of the present invention;
FIG 6 shows a routing optimization option extended in order to implement local routing optimization according to an embodiment of the present invention;
FIG 7 is a schematic structural view of an MAG according to an embodiment of the present invention; and
FIG 8 is a schematic view of a system for implementing local routing optimization according to an embodiment of the present invention.

### DETAILED DESCRIPTION OF THE EMBODIMENTS

In embodiments of the present invention, an MAG of an MN receives a packet sent from the MN with a destination address of a CN; queries for a binding update entry corresponding to the MN and the CN, and acquires a local routing flag in the binding update entry; sends the packet to the CN, when the local routing flag in the binding update entry is an MAG local routing flag MAGLocalRouting; and sends the packet to an MAG of the CN when the local routing flag in the binding update entry is an LMA local routing flag LMALocalRouting. By implementing the present invention, delay in sending the packet can be shortened, so as to improve user experience.

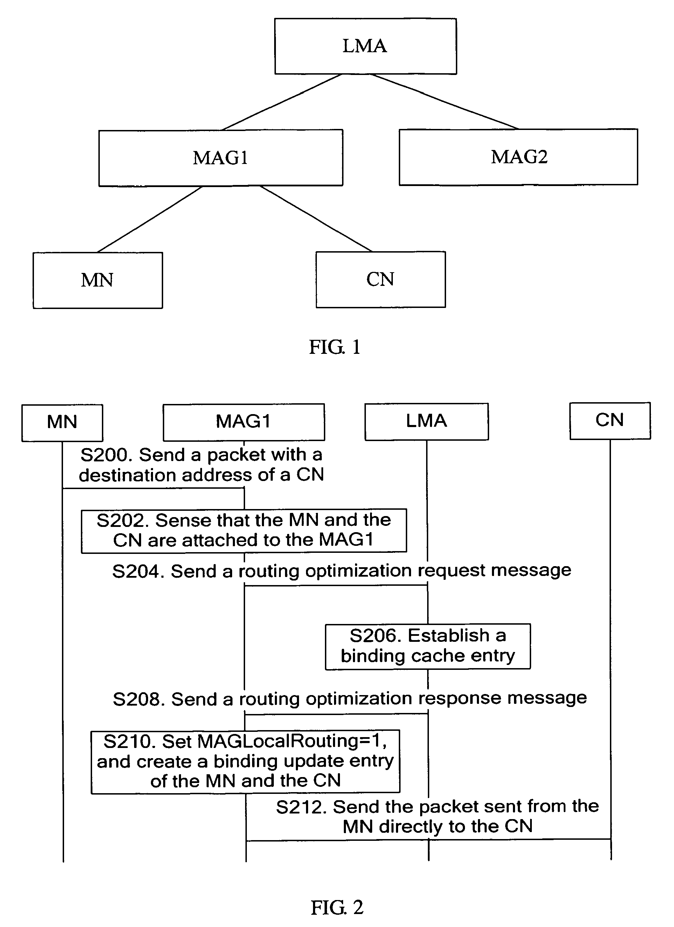

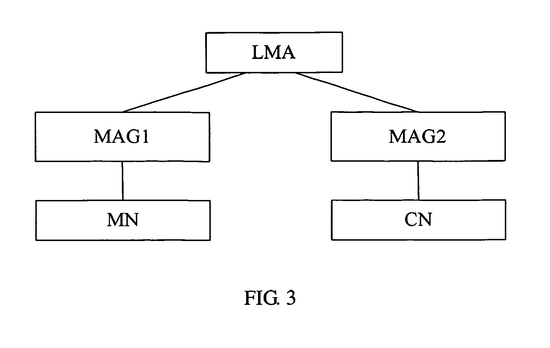

The embodiments of the present invention are applied in a scenario in which the MN and the CN are located in the same LMA management domain. On such premise, the MN and the CN can be attached to the same MAG (as shown in FIG 1), or attached to different MAGs (as shown in FIG. 3).

FIG 1 is a view illustrating a scenario in which an MN and a CN are attached to the same MAG according to an embodiment of the present invention. An MAG1 and a second MAG (MAG2) are located in the same LMA management domain, and the MN and the CN are located in the management domain of the MAG1, that is, the MN and the CN are attached to the same LMA and the same MAG (that is, the MAG1).

In this embodiment of the present invention, the content of a binding update list or a binding cache list maintained on the MAG1, the MAG2, and the LMA is extended, so that the MAG1 and the MAG2 not only support the binding of HNPs and proxy care-of addresses of the MN and the CN respectively, but also support the MAG local routing flag (MAGLocalRouting) and the LMA local routing flag (LMALocalRouting), and the LMA also supports the LMA local routing flag.

In specific implementation, values of MAGLocalRouting and LMALocalRouting can be set at will to indicate a state in which local routing optimization is allowed to be performed. For example, in an embodiment of the present invention, when the value of MAGLocalRouting or LMALocalRouting is set to 1, it indicates that local routing optimization is allowed, and when the value of MAGLocalRouting or LMALocalRouting is set to 0, it indicates that implementation of local routing optimization is forbidden; and vice versa. MAGLocalRouting and LMALocalRouting may be configured according to a local policy or a policy from an Authentication, Authorization and Accounting (AAA) server. For example, if the AAA server allows the MAG1 to support a routing optimization mode, the MAG1 sets MAGLocalRouting to 1 according to the policy of the AAA server, and actively initiates a routing optimization process, or passively waits for the LMA to initiate the routing optimization process.

FIG 2 is a flow chart of a method for implementing local routing optimization when the MN and the CN are attached to the same MAG according to an embodiment of the present invention. The method is applied in the scenario as shown in FIG. 1, and mainly includes the following steps.

In S200, a packet sent from an MN to a CN arrives at an MAG of the MN, that is, an MAG1.

In the embodiment of the present invention, mobility management is performed at a network side in an agent manner, so the packet sent from the MN to the CN arrives at the MAG1.

In S202, after receiving the packet sent from the MN, the MAG1 determines whether the CN is attached to the MAG1 according to a destination address of the packet. In this embodiment, the CN is attached to the MAG1.

Various manners, which are well known to persons skilled in the art, can be adopted for the MAG1 to determine/sense whether the MN and the CN are attached to the MAG1, and are not limited herein.

In S204, when the MAG1 senses that both the MN and the CN are attached to the MAG1, the MAG1 sends a routing optimization request message to its own LMA, where the routing optimization request message carries a routing optimization option for negotiating with the LMA over whether to allow the MAG1 to implement local routing optimization between the MN and the CN.

For example, the routing optimization request message may be an extended proxy binding update message, and the extended proxy binding update message carries the routing optimization option.

In S206, after receiving the routing optimization request message sent from the MAG1, if the MAG1 is allowed to implement local routing optimization between the MN and the CN, the LMA locally establishes a corresponding binding cache entry, and sets a corresponding LMA local routing flag in the binding cache entry.

In S208, the LMA returns a routing optimization response message to the MAG1, and the routing optimization response message carries the routing optimization option for determining whether to allow the MAG1 to implement local routing optimization.

Specifically, the routing optimization response message may be an extended proxy binding response message, and the proxy binding response message carries the routing optimization option.

In S210, the MAG1 extracts the routing optimization option from the received routing optimization response message, if the routing optimization option indicates that the LMA allows the MAG1 to implement local routing optimization, the MAG1 establishes a binding update entry of the MN and the CN, and sets an MAG local routing flag (MAGLocalRouting) of the binding update entry to 1, where the binding update entry may be stored in an original binding update list of the MAG1, or stored in a separately established local routing optimization list.

In S212, after establishing the binding update entry, the MAG1 sends the packet received from the MN to the CN according to the binding update entry.

According to the embodiment of the present invention, the MAG1 acquires a routing optimization policy from the LMA, establishes a binding relation between the MN and the CN according to a decision of the LMA, and sends the packet, which is sent from the MN to the CN, according to the binding relation, so as to improve the communication efficiency and user experience.

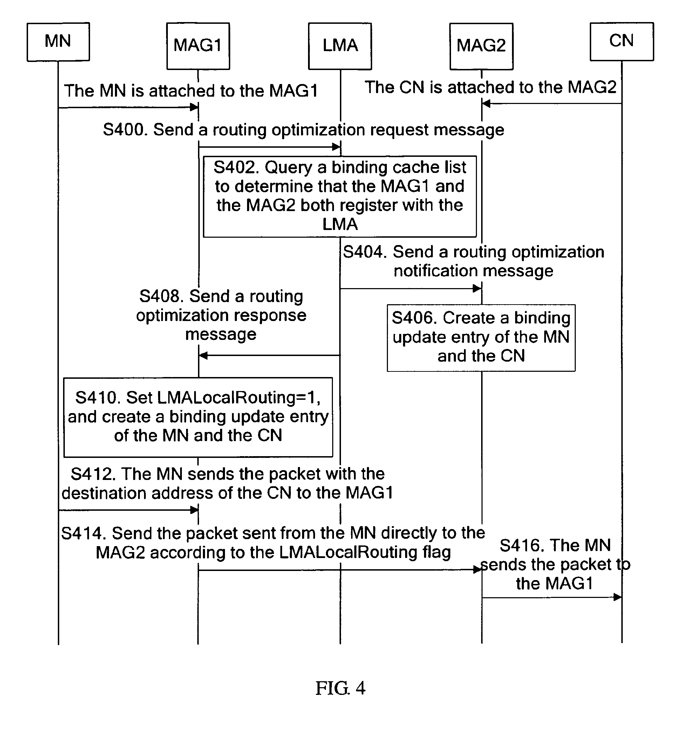

FIG 3 is a view illustrating a scenario in which an MN and a CN are attached to different MAGs in the same LMA management domain according to another embodiment of the present invention. An MAG1 and an MAG2 are located in the same LMA management domain, the MN is located in the management domain of the MAG1, and the CN is located in the management domain of the MAG2, that is, the MN and the CN are attached to the same LMA, but attached to different MAGs (that is, the MN is attached to the MAG1, and the CN is attached to the MAG2). As shown in FIG. 4, in another embodiment, the present invention provides a method for implementing local routing optimization when an MN and a CN are attached to different MAGs in the same LMA management domain, which is applied in the scenario as shown in FIG. 3, and mainly includes the following steps.

In S400, after receiving a packet sent from an MN with a destination address of a CN, an MAG1 sends a routing optimization request message to an LMA, where the routing optimization request message may carry a routing optimization option which may include a CN Identifier (CN ID) or an HNP of the CN (CN HNP) for negotiating with the LMA over whether to allow local LMA routing optimization, that is, whether to allow the packet sent from the MN to be directly sent from the MAG1 to the MAG of the CN, that is, the MAG2, without passing through the LMA. Specifically, the routing optimization request message may be an extended proxy binding update message, and the extended proxy binding update message carries information about the routing optimization option.

The routing optimization request message mentioned above may also be sent by the MAG1, in the condition that the MAG1 is triggered by a policy server or an AAA server. Specifically, when the policy server or the AAA server informs the MAG1 that it is required to perform routing optimization on a certain service of the MN, an initial value is assigned, on the MAG1, to a local routing flag corresponding to the MN, and the MAG1 negotiates, according to the initial value, with the LMA over whether to allow local routing optimization and which routing optimization mode to adopt, after receiving the packet sent from the MN.

In S402, the LMA receives the routing optimization request message sent from MAG1, extracts the routing optimization option in the routing optimization request message, and queries a binding update list according to the CN ID or the CN HNP, so as to determine whether both the MAG1 and the MAG2 register with the LMA. After finding a binding update entry corresponding to the CN, the LMA can determine whether the MAG1, acting as the agent of the MN, and the MAG2, acting as the agent of the CN, both register with the LMA.

In S404, after determining that the MAG1 and the MAG2 both register with the LMA, the LMA sends a routing optimization notification message to the MAG2, where the routing optimization notification message carries a routing optimization option for instructing the MAG2 to establish an LMALocalRouting flag, and the routing optimization notification message further carries an HNP of the MN (MN HNP) and a proxy care-of address of the MN (that is, an address of the MAG1).

In S406, after receiving the routing optimization notification message sent from the LMA, the MAG2 extracts the routing optimization option in the routing optimization notification message, locally establishes a binding update entry of the MN and the CN according to the option, where the binding update entry includes a home address and a proxy care-of address of the MN, a CN HNP, and an address of the LMA, and sets the LMALocalRouting flag of the binding update entry to 1. The binding update entry may be stored in an original binding update list of the MAG2, or stored in a separate local routing optimization list.

In S408, the LMA sends a routing optimization response message to the MAG1 acting as the agent of the MN, for instructing the MAG1 to set the LMALocalRouting flag and to establish a binding relation between the MN and the CN. The message carries a routing optimization option, where the routing optimization option includes the LMALocalRouting flag, the CN HNP, and a proxy care-of address of the CN (that is, an address of the MAG2). The routing optimization response message may be an extended proxy binding response message.

In S410, after receiving the routing optimization response message sent from the LMA, the MAG1 extracts the routing optimization option in the routing optimization response message, locally establishes a binding update entry of the MN and the CN according to the routing optimization option, where the binding update entry includes home addresses and proxy care-of addresses of the CN and the MN respectively, and sets the LMALocalRouting flag of the binding update entry to 1. The binding update entry may be stored in an original binding update list of the MAG1, or stored in a separate local routing optimization list.

In the above process, the MAG1 may also establish a binding update entry of the MN and a binding update entry of the CN separately, set the LMALocalRouting flag in the binding update entry of the MN and in the binding update entry the CN to 1 respectively, and establish an association entry of the MN and the CN, where the association entry may be stored in the binding update entry of the MN and in the binding update entry the CN, or stored in an independent local routing optimization list.

The MAG1 sends, according to the established binding update entry, the packet received in step S400 to the MAG2, and the MAG2 sends the packet to the CN.

In S412, the MN continues to send the packet with the destination address of the CN.

In S414, after receiving the packet in step S412, the MAG1 queries the binding update list, and sends the packet in the local routing optimization mode, that is, sends the packet directly to the MAG2 without passing through the LMA, when the MAG1 finds that the LMALocalRouting flag in the binding update entry corresponding to the MN and the CN is 1.

When sending the packet, the MAG1 may encapsulate the packet with an exterior packet header in which a source address is the address of the MAG1, and a destination address is the address of the MAG2; or modify a packet header of the packet by modifying the destination address to the address of the MAG2, and adding a destination address option, which includes the home address of the CN, to the packet header.

In S416, after receiving the packet sent from the MAG1, the MAG2 sends the packet to the CN.

Specifically, when the packet is encapsulated with the exterior packet header by the MAG1, the MAG2 removes the exterior packet header of the packet first, and sends the packet with the exterior packet header removed to the CN; and when the packet has the destination address of the MAG2, and carries the destination address option, the MAG2 modifies the destination address of the packet to the home address of the CN, and sends the packet with the modified destination address to the CN.

According to the embodiment of the present invention, when the MAG1 and the MAG2 are located in the same LMA management domain, the MAG1 implements local routing optimization according to the LMA local routing flag LMALocalRouting acquired from the LMA, so as to avoid delay in sending the packet caused by adopting a tunnel mode, thereby improving communication efficiency and user experience.

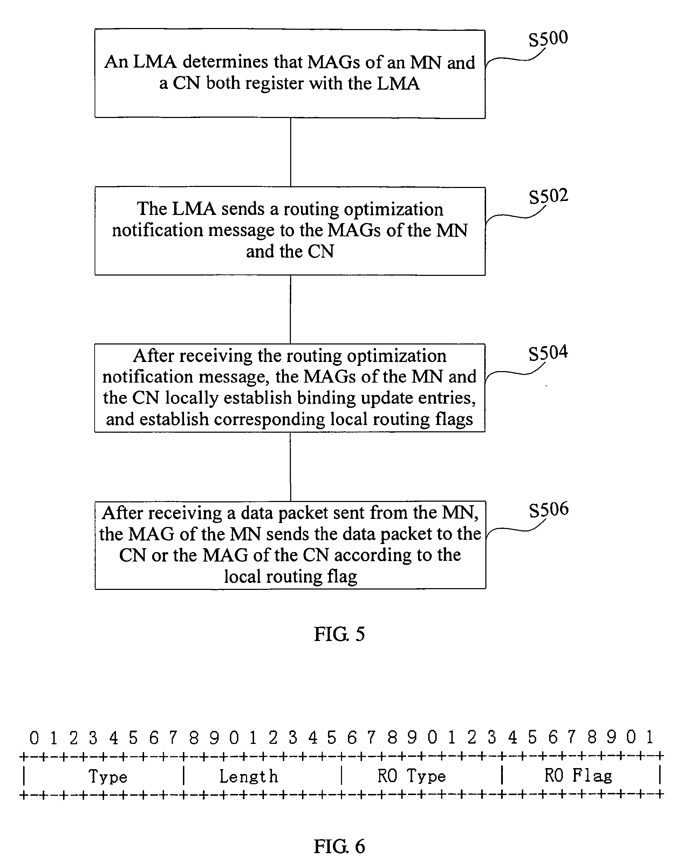

FIG 5 is a flow chart of a method for local routing optimization according to another embodiment of the present invention. The method according to this embodiment is applicable both to the scenario as shown in FIG. 1 and to the scenario as shown in FIG. 3, and includes the following steps.

In S500, an LMA determines that an MAG of an MN and an MAG of a CN both register with the LMA by querying a local binding cache list. The MN and the CN may be attached to the same MAG, that is, the MAG1 (FIG. 1), or attached to different MAGs, that is, the MAG1 and the MAG2 (FIG 3).

In S502, the LMA sends a routing optimization notification message to the MAG of the MN and the MAG of the CN, where the routing optimization notification message carries a routing optimization option, and the routing optimization option includes a routing optimization flag (MAGLocalRouting or LMALocalRouting), and an HNP and a proxy care-of address corresponding to the MN or the CN, for instructing the MAGs of the MN and the CN to establish an LMA local routing flag LMALocalRouting in a binding update entries of the MN and the CN, and sets LMALocalRouting=1.

When the MN and the CN are attached to different MAGs, that is, the MAG1 and the MAG2, the routing optimization notification message sent to the MAG1 carries an MAG local routing flag MAGLocalRouting, an MN HNP and a proxy care-of address of the MN (an address of the MAG1), and a CN HNP and a proxy care-of address of the CN (an address of the MAG2); and the routing optimization notification message sent to the MAG2 carries the MAG local routing flag MAGLocalRouting, the CN HNP and the proxy care-of address of the CN (the address of the MAG2), and the MN HNP and the proxy care-of address of the MN (the address of the MAG1).

When the MN and the CN are both attached to the MAG1, the LMA only needs to send the routing optimization notification message to the MAG1, where the routing optimization notification message carries the MAGLocalRouting, the MN HNP, and the CN HNP.

In S504, after receiving the routing optimization notification message sent in step S502, the MAG of the MN and the CN (the MAG1 and/or the MAG2) extracts the routing optimization option in the routing optimization notification message, establishes the binding update entry of the MN and the CN according to the routing optimization option, and sets a local routing flag in the binding update entry. Specifically, when the MN and the CN are both attached to the MAG1, the local routing flag set in the binding update entry on the MAG1 is MAGLocalRouting; and when the MN and the CN are attached respectively to the MAG1 and the MAG2, the local routing flags set in the binding update entries on the MAG1 and the MAG2 are LMALocalRouting.

In S506, the MAG1 receives a packet sent from the MN with a destination address of the CN, queries for the corresponding binding update entry according to a source address and the destination address of the packet, and, according to the local routing flag in the binding update entry, chooses to send the packet directly to the CN or to send the packet to the MAG of the CN.

Specifically, when the local routing flag MAGLocalRouting in the binding update entry is 1, the MAG1 sends the packet directly to the CN; and when the local routing flag LMALocalRouting in the binding update entry is 1, the MAG1 sends the packet to the MAG of the CN, the MAG2, in a manner the same as the method described in FIG. 4.

According to the embodiment of the present invention, the LMA actively sends the routing optimization notification message to the MAG of the MN and the CN, so that the MAG of the MN and the CN locally establishes the binding update entry with the local routing flag set, and accordingly, after receiving the packet with the destination address of the CN, the MAG of the MN sends, according to the binding update entry, the packet directly to the CN or the MAG of the CN, without the need of sending the packet to the LMA, so as to avoid delay in sending the packet from the MN to the CN, thereby improving communication efficiency and user experience.

In order to implement the present invention, the routing optimization request message, the routing optimization response message, and the routing optimization notification message in the above embodiments all need to carry a routing optimization option as shown in FIG. 6, where:
Type: type, which indicates that the function of the option is to perform negotiation over routing optimization;
Length: length, which indicates a length of the routing optimization option;
RO Type: routing optimization type, where if RO Type=MAGLocalRouting, it indicates that local routing optimization is performed between nodes under the same MAG; and if RO Type= LMALocalRouting, it indicates that local routing optimization is performed between nodes under the same LMA but under different MAGs, and the embodiments of the present invention do not exclude other types of routing optimization; and
RO Flag: routing optimization flag, indicating whether to allow routing optimization, for example, if RO Type is MAGLocalRouting, and RO Flag is 1, it indicates that local routing optimization between nodes under the same MAG is allowed; and if RO Flag is 0, it indicates that local routing optimization between nodes under the same MAG is forbidden.

The routing optimization option may be borne in a Proxy Mobile IP (PMIP) message, so as to negotiate between the LMA and the MAG or between the MAG1 and the MAG2 over whether to allow corresponding types of local routing optimization. When negotiation is performed between the MAG1 and the MAG2, it indicates that the MAG1 acting as the agent of the MN performs a proxy binding process/routing optimization process to the MAG2 acting as the agent of the CN, or the MAG2 acting as the agent of the CN performs the proxy binding process/routing optimization process to the MAG1 acting as the agent of the MN.

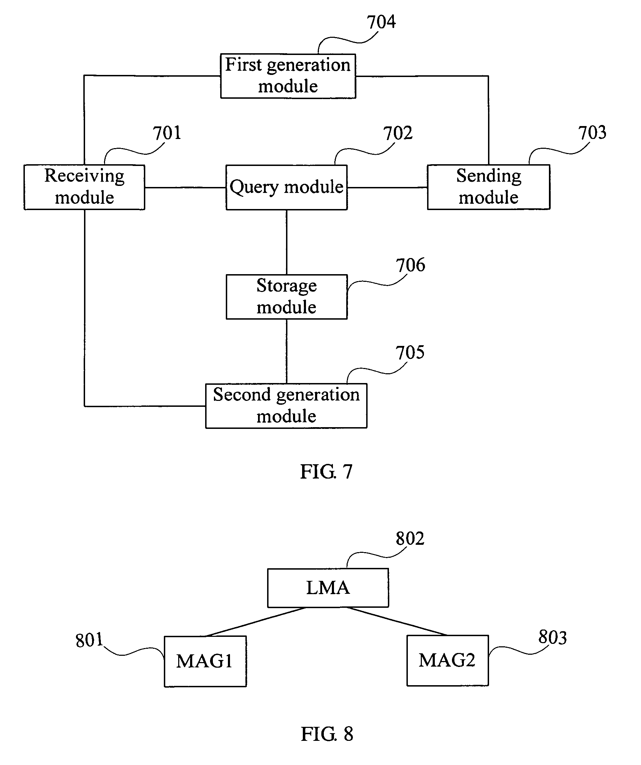

As shown in FIG. 7, in an embodiment, the present invention further provides an MAG for implementing the method according to the embodiments of the present invention. A receiving module 701 receives a packet sent from a locally attached MN with a destination address of a CN, then a query module 702 queries for a binding update entry corresponding to the MN and the CN from a storage module 706, so as to determine whether a local routing flag is set in the binding update entry, and a sending module 703 forwards the packet in an existing mode if the local routing flag is not set in the binding update entry; and the sending module 703 forwards the packet according to the local routing flag if the local routing flag is set in the binding update entry. Specifically, when the local routing flag is an MAG local routing flag MAGLocalRouting, the sending module 703 sends the packet directly to the CN; and when the local routing flag is an LMA local routing flag LMALocalRouting, the sending module 703 sends the packet to an MAG of the CN.

The MAG further includes a first generation module 704, which generates a routing optimization request message according to information of the MN and the CN after the receiving module 701 receives the packet if the MN sends the packet to the CN for the first time, where the routing optimization request message carries the routing optimization option as shown in FIG 6, and the sending module 703 sends the routing optimization request message to an LMA of the MAG.

After receiving the routing optimization request message, if it is determined that the MAG is allowed to implement local routing optimization between the MN and the CN, the LMA sends a routing optimization response message to the MAG, where the routing optimization response message carries a routing optimization option (mainly including the local routing flag, and related information of the MN and the CN). After receiving the routing optimization response message (or the LMA actively sends a routing optimization notification message), the receiving module 701 of the MAG extracts the routing optimization option in the routing optimization response message and sends the routing optimization option to a second generation module 705. The second generation module 705 generates a binding update entry of the MN and the CN according to the routing optimization option, and sends the binding update entry to the storage module 706 for storage.

As shown in FIG. 8, in an embodiment, the present invention further provides a system for local routing optimization, for implementing the method according to the embodiments of the present invention.

An MAG1 801 is configured to acquire a local routing flag from an LMA 802, establish a binding update entry of an MN and a CN, and set the local routing flag in the binding update entry; and forward, according to the binding update entry, a packet sent from the MN with a destination address of the CN, after receiving the packet.

The acquiring, by the MAG1 801, the local routing flag from the LMA includes the following steps.

The MAG1 sends a routing optimization request message to the LMA, and acquires the local routing flag from a routing optimization response message sent from the LMA.

Alternatively, the MAG1 acquires the local routing flag from a routing optimization notification message actively sent from the LMA.

The system further includes an MAG2 803.

When the MN and the CN are both attached to the MAG1 801, the local routing flag is an MAG local routing flag MAGLocalRouting.

When the MN is attached to the MAG1, and the CN is attached to the MAG2 803, the local routing flag is an LMA local routing flag LMALocalRouting.

According to the embodiment of the present invention, the MAG acquires the local routing flag from the LMA through the routing optimization request message, or the LMA actively sends the local routing flag to the MAG through the routing optimization notification message, so that the MAG can send the packet sent from the MN to the CN or to the MAG of the CN in a routing optimization mode according to the local routing flag, so as to avoid delay caused by the need of sending the packet to the LMA first in a tunnel mode, thereby improving communication efficiency and user experience.

Through the above description of the implementation, it is clear to persons skilled in the art that the present invention may be implemented through hardware, or through software plus a necessary universal hardware platform. Based on this, the technical solutions of the present invention may be embodied in the form of a software product. The software product may be stored in a nonvolatile storage medium (for example, CD-ROM, USB flash drive, or removable hard disk) and contain several instructions used to instruct computer equipment (for example, a personal computer, a server, or network equipment) to perform the method according to the embodiments of the present invention.

The above descriptions are merely some exemplary embodiments of the present invention. It should be noted that persons of ordinary skill in the art can make various improvements and refinements without departing from the principle of the present invention. All such improvements and refinements should be construed as falling within the protection scope of the present invention.

## Claims

1. A method for local routing optimization, comprising:
receiving a packet sent from a Mobile Node, MN with a destination address of a Correspondent Node, CN;
querying for a binding update entry corresponding to the MN and the CN, and acquiring a local routing flag in the binding update entry;
when the local routing flag in the binding update entry is a Mobile Access Gateway, MAG local routing flag MAGLocalRouting, sending the packet to the CN; and
when the local routing flag in the binding update entry is a Local Mobile Anchor, LMA local routing flag LMALocalRouting, sending the packet to an MAG of the CN.

2. The method according to claim 1, further comprising establishing the binding update entry corresponding to the MN and the CN:
when the MN and the CN are attached to the same MAG, sending a routing optimization request message to a common LMA of the MN and the CN, requesting implementation of local routing optimization on the MN and the CN;
receiving a routing optimization response message sent from the LMA, wherein the routing optimization response message carries the MAG local routing flag MAGLocalRouting; and
establishing the binding update entry of the MN and the CN according to the routing optimization response message, and setting the MAGLocalRouting in the binding update entry.

3. The method according to claim 1, further comprising establishing the binding update entry corresponding to the MN and the CN:
when the MN and the CN are attached to the same MAG, receiving a routing optimization notification message actively sent from a common LMA of the MN and the CN, wherein the routing optimization notification message carries the MAG local routing flag MAGLocalRouting; and
establishing the binding update entry of the MN and the CN according to the routing optimization notification message, and setting the MAGLocalRouting in the binding update entry.

4. The method according to claim 1, further comprising establishing the binding update entry corresponding to the MN and the CN:
when the MN and the CN are attached to different MAGs under the same LMA, sending a routing optimization request message to the LMA, requesting implementation of local routing optimization on the MN and the CN;
receiving a routing optimization response message sent from the LMA, wherein the routing optimization response message carries the LMA local routing flag LMALocalRouting; and
establishing the binding update entry of the MN and the CN according to the routing optimization response message, and setting the LMALocalRouting in the binding update entry.

5. The method according to claim 1, further comprising establishing the binding update entry corresponding to the MN and the CN:
when the MN and the CN are attached to different MAGs under the same LMA, receiving a routing optimization notification message actively sent from the LMA, wherein the routing optimization notification message carries the LMA local routing flag LMALocalRouting; and
establishing the binding update entry of the MN and the CN according to the routing optimization notification message, and setting the LMALocalRouting in the binding update entry.

6. The method according to claim 4 or 5, further comprising establishing, on the MAG of the CN, the binding update entry of the MN and the CN, and setting the LMALocalRouting in the binding update entry; and
sending, by the MAG of the CN, the packet sent from the MAG of the MN to the CN according to the binding update entry.

7. A Mobile Access Gateway, MAG, comprising:
a receiving module, configured to receive a packet sent from a Mobile Node, MN with a destination address of a Correspondent Node, CN;
a query module, configured to query for a binding update entry corresponding to the MN and the CN; and
a sending module, configured to send the packet to the CN, when a local routing flag in the binding update entry is an MAG local routing flag MAGLocalRouting; and send the packet to an MAG of the CN, when the local routing flag in the binding update entry is a Local Mobile Anchor, LMA, local routing flag LMALocalRouting.

8. The MAG according to claim 7, further comprising:
a first generation module, configured to generate a routing optimization request message according to information of the MN and the CN, wherein
the sending module is further configured to send the routing optimization request message to an LMA.

9. The MAG according to claim 8, wherein the receiving module is further configured to receive a routing optimization response message sent from the LMA, and extract a routing optimization option in the routing optimization response message, and the routing optimization option comprises the local routing flag.

10. The MAG according to claim 7, wherein the receiving module is further configured to receive a routing optimization notification message actively sent from an LMA, and extract a routing optimization option in the routing optimization notification message, wherein the routing optimization option comprises the local routing flag.

11. The MAG according to claim 9 or 10, further comprising a second generation module and a storage module, wherein
the second generation module is configured to generate the binding update entry according to the routing optimization notification message or the routing optimization response message, and set the local routing flag in the binding update entry; and
the storage module is configured to store the binding update entry generated by the second generation module.

12. A system for local routing optimization, comprising a first Mobile Access Gateway, MAG, and a Local Mobile Anchor, LMA, wherein
the first MAG is configured to acquire a local routing flag from the LMA, establish a binding update entry of a Mobile Node, MN, and a Correspondent Node, CN, and set the local routing flag in the binding update entry; and forward, according to the binding update entry, a packet sent from the MN with a destination address of the CN, after receiving the packet; and
the LMA is configured to send the local routing flag to the first MAG when it is determined that the first MAG is allowed to implement local routing optimization between the MN and the CN.

13. The system according to claim 12, wherein the acquiring, by the first MAG, the local routing flag from the LMA comprises:
sending, by the first MAG, a routing optimization request message to the LMA, and acquiring the local routing flag from a routing optimization response message sent from the LMA; or
acquiring, by the first MAG, the local routing flag from a routing optimization notification message actively sent from the LMA.

14. The method according to claim 12 or 13, wherein
when the MN and the CN are both attached to the first MAG, the local routing flag is an MAG local routing flag MAGLocalRouting.

15. The system according to claim 12 or 13, further comprising a second MAG, wherein
the LMA is further configured to send the local routing flag to the second MAG through the routing optimization notification message.

16. The system according to claim 15, wherein
when the MN is attached to the first MAG, and the CN is attached to the second MAG, the local routing flag is an LMA local routing flag LMALocalRouting.
